# EUROPÄISCHE PATENTSCHRIFT

(11) **EP 0 511 542 B1**
(45) Veröffentlichungstag und Bekanntmachung des Hinweises auf die Patenterteilung: **05.06.1996**
(21) Anmeldenummer: 92106388.9
(22) Anmeldetag: 14.04.1992
(51) Int. Cl.: G01T 1/40

(54) **Verfahren zur automatischen Driftstabilisierung bei der Strahlungsmessung mit einem Detektor**
Radiation detector with automatic drift stabilisation
Détecteur à rayonnement avec stabilisation automatique de dérivé

(30) Priorität: 29.04.1991 DE 4114030
(43) Veröffentlichungstag der Anmeldung: 04.11.1992
(73) Patentinhaber: Laboratorium Prof. Dr. Rudolf Berthold GmbH & Co., D-75323 Bad Wildbad (DE)
(72) Erfinder: Evers, Dieter, Dr., W-7541 Straubenhardt 1 (DE)
(74) Vertreter: Frank, Gerhard, Dipl.-Phys.

(56) Entgegenhaltungen:
- EP-A- 0 066 763
- DE-A- 1 809 520
- FR-A- 2 550 339
- US-A- 3 179 801
- US-A- 3 428 804

## Beschreibung

Die Erfindung betrifft ein Verfahren gemäß dem Oberbegriff des Patentanspruchs 1.

Ein gattungsgemäßes Verfahren ist aus der DE-PS 18 09 520 bekannt; bei diesem Verfahren wird eine Schwelle S einer Impulsgröße G definiert, so daß die Anzahl (Rate) derjenigen Impulse, deren Größe über diesem Schwellenwert S liegt, mit Hilfe eines Integraldiskriminators "abspaltbar" wird und diese Impulsrate konstant gehalten werden kann.

Dies bedeutet, daß Änderungen in der Anzahl dieser Impulse, die beispielsweise durch unerwünschte Verstärkungsänderungen in der nachgeschalteten Auswerteschaltung bedingt sind, zuverlässig eliminiert werden können, die Regelung also driftstabilisierend wirkt. Als "Orientierungspunkt" für eine solche Schwelle S sind besonders Stellen im Impulsspektrum geeignet, die an der Flanke eines Peaks liegen, da hier eine besonders empfindliche Driftstabilisierung durchgeführt werden kann.

Eine Besonderheit bei dem Verfahren nach der oben genannten Patentschrift besteht darin, daß die Meß-Strahlungsquelle selbst bzw. deren Impulshöhenverteilung zur Driftstabilisierung herangezogen wird.

Eine Stabilisierung mit einer zusätzlichen, externen Lichtquelle zeigt die CH-PS 665 291; hierbei wird der Szintillationsdetektor zusätzlich zu der für die eigentliche Messung verwendeten Strahlenquelle von einer weiteren Lichtquelle beschickt und zwar in modulierter Form, so daß der nachgeschaltete fotoelektrische Wandler von den von der durchstrahlenden Strahlenquelle stammenden Lichtimpulsen unterscheiden kann; hierbei wird dann die Anzahl der von der zusätzlichen Lichtquelle stammenden Referenzimpulse des fotoelektrischen Wandlers zur Stabilisierung des Szintillationsdetektors verwendet.

Die beiden geschilderten Verfahren haben ihre spezifischen Nachteile:

Da das Verfahren nach DE-PS 1809 520 die Meßstrahlungsquelle zugleich als Bezugsquelle für die Driftstabilisierung nutzt, muß immer genügende Meßstrahlungsintensität den Detektor erreichen.

Genau das ist z. B. bei kontinuierlichen Füllstandsmessungen aber nicht gegeben. Die Meßstrahlungsintensität am Detektor schwankt stark mit dem Füllstand und wird in der Regel bei vollem Behälter vollständig absorbiert.

Bei radiometrischen Füllstandsmessungen werden neben NaJ-Szintillatoren und einem Stabstrahler auch großvolumige Plastikszintillatoren in Stabform mit Längen bis zu 2m und Punktstrahler eingesetzt. Während die bei Füllstandsmessungen notwendige Meßgenauigkeit keine Driftstabilisierung bei NaJ-Detektoren erfordert, ist diese wegen der geringeren Fluoreszenzausbeute und schlechteren Lichtsammlung bei den großvolumigen Plastikszintillatoren notwendig.

Der Wunsch nach der Verwendung großvolumiger Plastik-Szintillatoren mag zur Lösung der CH-PS 665 291 mit der zusätzlichen, externen Referenzlichtquelle geführt haben; diese Lösung ist jedoch apparativ recht aufwendig wegen der erforderlichen zusätzlichen elektronischen Bauteile.

Aufgabe der Erfindung ist daher eine Weiterbildung dieser beiden Verfahren zur Driftstabilisierung, mit der diese wesentlich vereinfacht wird und insbesondere bei Plastikszintillatoren eingesetzt werden kann.

Erfindungsgemäß wird diese Aufgabe gemäß Patentanspruch 1 gelöst.

Der Grundgedanke der Erfindung besteht also darin, weder die Meß-Strahlungsquelle selbst (DE-PS 18 09 520), noch eine separate, externe Strahlungsquelle (CH-PS 665 291) einzusetzen, sondern die immer vorhandene, natürliche Höhenstrahlung, die mit einem spezifischen Energieverlust von ca. 1,7 MeV/g/cm² beispielsweise in einem Plastikszintillator der Dicke 1 cm einen Energieverlust von etwa 2 MeV erleidet und folglich einen entsprechenden Peak im Impulshöhenspektrum des mit dem Fotomultiplier nachweisbaren Szintillationslichts verursacht. Dieser Peak liegt weit über der für radiometrische Transmissionsmessungen benutzten Nutzstrahlung; die Intensität dieses Peaks ist zwar nur gering, sie wird jedoch durch keinerlei sonstige Strahlung beeinflußt und kann folglich zur Driftstabilisierung benutzt werden, durch Setzen der oben erläuterten Schwelle in den Bereich dieses Peaks bzw. von dessen Flanke. Hierbei werden alle zur Verstärkungsschwankung beitragenden Effekte wie Temperatur oder alterungsbedingte Fluoreszenzausbeuteschwankungen, Lichtschwächungsänderungen im Szintillator ebenso kompensiert wie Schwankungen im nachgeschalteten Detektor zum Nachweis des aus dem Szintillator austretenden Szintillationslichtes, sowie der nachgeschalteten elektronischen Bauteile.

Ein Ausführungsbeispiel einer Meßanordnung, mit der das erfindungsgemäße Verfahren ausgeführt werden kann und das Verfahren selbst werden anhand von Zeichnungen näher erläutert, es zeigen:
- Figur 1:: Eine schematische Darstellung der Meßanordnung zur Durchführung einer Füllstandsmessung,
- Figur 2:: ein Beispiel eines Impulshöhenspektrums mit einer Co-60-Meßstrahlungsquelle und senkrechtem Plastik-Szintillator gemäß Figur 1.

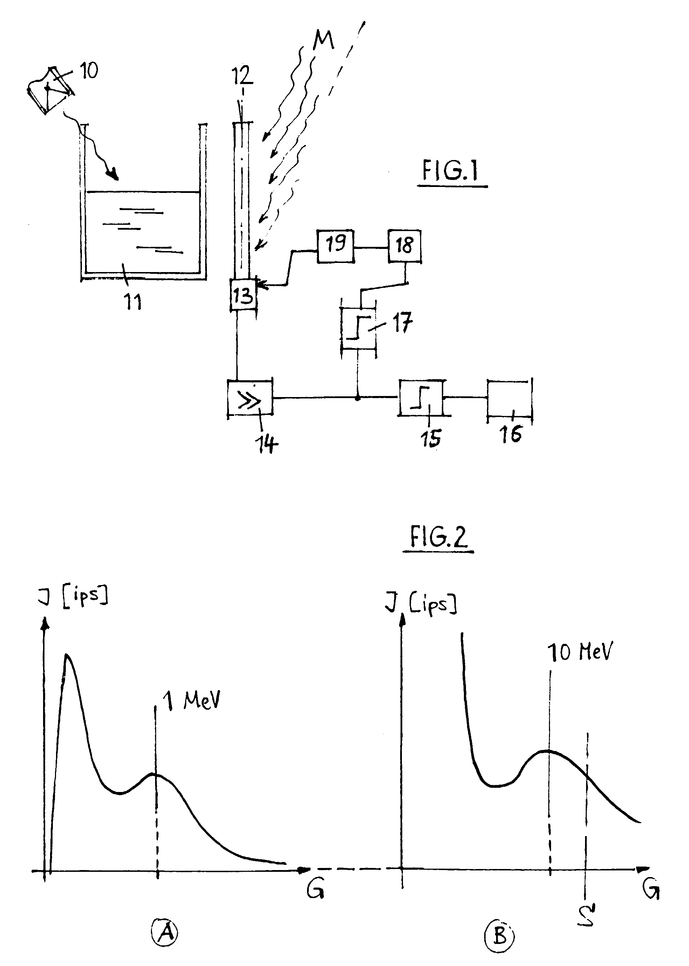

Bei der in Figur 1 dargestellten Meßanordnung durchstrahlt eine Meßstrahlungsquelle 10, beispielsweise ein Co-60-Strahler ein Gefäß 11, in dem Flüssigkeit enthalten ist, deren Füllhöhe in diesem Gefäß 11 bestimmt werden soll. Je nach Füllhöhe erreicht ein bestimmter Teil dieser Strahlung den Detektor 12, einen Plastikszintillator, der entsprechende Lichtimpulse mit einem bestimmten Spektrum abgibt, die von einem nachgeschalteten Fotomultiplier 13 gewandelt werden.

Die nachfolgende Schaltung, elektronischer Verstärker 14, Amplituden-Diskriminator 15 und 17, Anzeigeeinheit 16, Regeleinheit 18 und Hochspannungsversorgung 19 entsprechen im wesentlichen den Komponenten bei der DE-PS 18 09 520.

Der Einsatz dieser Meßanordnung nutzt nach dem erfindungsgemäßen Verfahren die in Figur 1 schematisch angedeutete Höhenstrahlung M aus, die ebenfalls vom Szintillator 12 aufgefangen und in entsprechende Lichtimpulse umgewandelt wird. Hierbei entsteht weit außerhalb des Spektrums der Co-60-Quelle 10 (Figur 2A) bei Verwendung eines senkrecht angeordneten Plastik-Stabszintillators 12 von 48 mm Durchmesser und 750 mm Länge ein Peak, der durch die Höhenstrahlung M bzw. deren harter Komponente bei etwa 10 MeV (Figur 2B) verursacht wird.

Die Zählrate im Bereich des "10 MeV"-peaks beträgt etwa 5 Ips. Sie ist vollkommen frei von sonstiger Strahlung und eignet sich daher zur Driftstabilisierung. Eine auf diesen "Höhenstrahlungspeak" oder in deren Flankenbereich gesetzte Integralschwelle S kann daher (beispielsweise anstelle einer entsprechenden Schwelle S im Spektrum der Figur 2A) zur Driftstabilisierung benutzt werden, wobei es lediglich einer entsprechenden Umstellung der elektronischen Bauteile nach der DE-PS 18 09 520 bedarf.

## Patentansprüche

1. Verfahren zur automatischen Driftstabilisierung bei der Strahlungsmessung mit einem Detektor, dessen Impulsamplitudenintegral ein Maß für die von ihm absorbierte Strahlungsenergie ist, unter Verwendung von dem Detektor nachgeschalteten Regeleinrichtungen, die unter Bezugnahme auf eine definierte Schwelle im Impulsamplitudenspektrum die Verstärkung derart nachregeln, daß die Rate aller Impulse mit im Vergleich zur Schwelle größerer Impulshöhe konstant gehalten wird und
dadurch das Meßergebnis entsprechend korrigiert wird, dadurch gekennzeichnet, daß die Schwelle (S) im Impulsamplitudenspektrum (I) im Bereich eines Peaks gesetzt wird, der vom Energieverlust der natürlichen Höhenstrahlung oder einer Komponente derselben im Detektor (12) verursacht wird.

2. Verfahren nach Anspruch 1, dadurch gekennzeichnet, daß die Schwelle (S) auf das Maximum des Peaks im Impulsamplitudenspektrum gelegt ist, der von den hochenergetischen Muonen im natürlichen Höhenstrahlungsspektrum verursacht ist.

3. Verfahren nach Anspruch 1, dadurch gekennzeichnet, daß die Strahlungsmessung eine Fluoreszenzmessung ist, mit einem Plastikszintillator als Detektor und einem nachgeschalteten Fotomultiplier als Verstärker.

4. Verfahren nach Anspruch 3, dadurch gekennzeichnet, daß zur Durchführung von Füllstandsmessungen der Plastikszintillator in Stabform ausgeführt ist, mit einer Dicke von etwa 5 cm.

## Claims

1. Method of automatic drift stabilisation in radiation measurement with a detector, a pulse amplitude integral of said detector being produced as a standard for the radiation energy absorbed by said detector, using control devices connected to the output side of the detector to adjust the amplification, on the basis of a defined threshold in the pulse amplitude spectrum, in such a way that the rate of all pulses having a pulse height greater than the threshold is kept constant and is correspondingly corrected by the measurement result,
characterised in that the threshold (S) is located in the vicinity of a peak in the pulse amplitude spectrum caused by the energy loss of naturally-occurring cosmic radiation or a component thereof in the detector (12).

2. Method according to claim 1, characterised in that the threshold (S) is located at the maximum of the peak in the pulse amplitude spectrum caused by the high-energy muons in the spectrum of naturally-occurring cosmic radiation.

3. Method according to claim 1, characterised in that the radiation measurement is a fluorescence measurement, with a plastic scintillator as detector and a subsequent photomultiplier as an amplifier.

4. Method according to claim 3, characterised in that, in order to carry out fill level measurements, the plastic scintillator is in the form of a bar with a thickness of approximately 5 cm.

## Revendications

1. Procédé de stabilisation automatique de la dérive dans la mesure de rayonnement avec un détecteur dont l'intégrale de l'amplitude des impulsions est une mesure de l'énergie rayonnante absorbée par lui, au moyen de dispositifs de régulation montés en aval du détecteur qui, en référence à un seuil défini dans le spectre d'amplitudes d'impulsions, réajuste l'amplification de façon telle que la fréquence de récurrence de toutes les impulsions soit maintenue constante lorsque l'amplitude des impulsions est plus grande comparativement au seuil et le résultat de mesure soit par la corrigé en conséquence,
caractérisé par le fait qu'on place le seuil (S) dans le spectre d'amplitudes d'impulsions (I) dans la zone d'un pic qui est produit par la perte d'énergie du rayonnement cosmique naturel ou d'une composante de celui-ci dans le détecteur (12).

2. Procédé selon la revendication 1, caractérisé par le fait que le seuil (S) est placé au maximum du pic du spectre d'amplitudes d'impulsions qui est produit par les muons à haute énergie du spectre de rayonnement cosmique naturel.

3. Procédé selon la revendication 1, caractérisé par le fait que la mesure de rayonnement est une mesure de fluorescence, avec un scintillateur en plastique comme détecteur et un photomultiplicateur monté en aval comme amplificateur.

4. Procédé selon la revendication 3, caractérisé par le fait que pour l'exécution de mesures de niveaux de remplissage, le scintillateur en plastique est réalisé sous forme de barreau, avec une épaisseur d'environ 5 cm.
